# EUROPEAN PATENT SPECIFICATION

(11) **EP 2 098 442 B1**
(45) Date of publication and mention of the grant of the patent: **28.09.2011**
(21) Application number: 09250257.4
(22) Date of filing: 30.01.2009
(51) Int. Cl.: B62J 15/00

(54) **Straddle type vehicle**
Im Grätschsitz zu benutzendes Fahrzeug
Véhicule du type monté à califourchon

(30) Priority: 07.03.2008 JP 2008058754
(43) Date of publication of application: 09.09.2009
(73) Proprietor: Yamaha Hatsudoki Kabushiki Kaisha, Shizuoka-ken Shizuoka 438-8501 (JP)
(72) Inventor: Kaneko, Kyohei c/o Yamaha Hatsudoki Kabushiki Kaisha, Iwata-shi Shizuoka-ken (JP); Okada, Takeshi c/o Yamaha Hatsudoki Kabushiki Kaisha, Iwata-shi Shizuoka-ken (JP)
(74) Representative: Lamb, Martin John Carstairs

(56) References cited:
- EP-A1- 1 612 131
- EP-A2- 2 077 219
- JP-A- 2000 344 171
- JP-A- 2005 088 659
- JP-A- 2007 186 114
- US-A- 4 822 067
- US-A1- 2004 212 169

## Description

### FIELD OF THE INVENTION

The present invention relates to a straddle type vehicle including a pair of front forks rotatably supporting an axle of a front wheel and a front fender disposed radially outwardly of the front wheel.

### BACKGROUND TO THE INVENTION

Conventionally, straddle type vehicles such as motorcycles are provided with a front fender for preventing pebbles, rainwater, and so forth flung up by a front wheel from scattering. For example, a front fender is known that is disposed between a pair of front forks rotatably supporting an axle of a front wheel and that has a function for protecting the front forks. Such an arrangement is disclosed in, for example, JP-A-2005-88659.

Specifically, a fork cover which swells upward is provided on the front fender in front of the front forks. Such a front fender having the function for protecting the front forks allows prevention of damage to the front forks, in particular inner tubes of the front forks.

The fender of JP-A-2005-88659 on which the preamble of claim 1 is based comprises front side and back side fenders which are formed in a unitary piece from resin. Mounting piece parts and an attachment rib are formed in right and left rear side parts of the front fender. The fender is attached to an upper part of the outer pipe by bolts.

However, the conventional front fender described above has the following problem. Specifically, there are cases that the front forks, particularly the inner tubes thereof, are yet damaged by pebbles and the like flung up by the front wheel with the above front fender having the function for protecting the front forks. In other words, there is room for improvement in prevention of damage to the front forks by pebbles and the like in the conventional front fender.

The present invention is made in consideration of such a problem, and the object is to provide a straddle type vehicle that is provided with a front fender having a function for protecting front forks and that allows more secure prevention of damage to the front forks.

JP2007-186114 discloses affront fender for a motorcycle, the front fender comprising a pair of mounting parts for attaching to a front fork of the motorcycle. The fender further comprises a broad forward portion located on the front side of the fork and having a wider dimension in the vehicle width direction.

US4822067 describes a motorcycle having a front fender attached to front forks above a front wheel. The front fender comprises a main fender body that is similar in configuration to the front wheel and guide walls that extend upwardly from side edges of the main body. The front fender is mounted in such a way that the guide walls are located inwardly of the front forks and outer plates are branched from the front portions of the guide walls and extend backwardly to outer side portions of the front forks so that the front forks are clamped between the guide walls and the outer plates. The spaces between the upper and lower side edges of the guide walls and the outer plates are covered with connecting portions.

EP1612131 describes a motorcycle having a fender structure that is divided into an upper fender and a lower fender. The upper fender 43 is provided with cover portions that cover the lower forks. Forwardly projecting mounting portions are provided at upper positions of the right and left cover portions. Holes formed in the mounting portions are aligned with corresponding through holes formed in mounting seats of a visor. The lower fender 45 comprises a cover portion 47 which covers the lower forks

US2004/0212169 describes a front fender formed with a top surface portion that faces an outer peripheral surface of a wheel and forms a curved surface having left and right side surface portions that face the outer peripheral side surfaces of the front wheel. A bottom rear edge of the fin is formed so as to descend forward in a slanting direction, and a portion in the rear of a bend line portion of the fin along a vertical direction is formed in a nearly flat shape. A receiving portion that receives the outer case of a front fork is formed between the side surface portion and the fin. Mounting seats are provided on the side surface portion of the fender for mounting the fender to the outer case of the front fork. A mounting portion of the fin is provided for mounting the fin to a mounting flange of the outer case of the fork

EP2077219 describes a front fender having an upper surface part located radially of the wheel and following the external shape of the front wheel and a pair of left and right surface parts extending downward from the upper surface part. A transitional part is formed on the upper surface part in front of the suspension forks. The transitional part includes a front side sloping surface, an edge or ridge part adjacent to the front side sloping surface and a rear side sloping surface 31d adjacent to the ridge part. The upper surface is directed downward (toward the outer circumference of the wheel) at the ridge part to direct airflow away from the upper surface. The upper surface part changes inclination after the ridge part to extend in a direction away from the travelling airflow such that airflow separates from the upper surface at the ridge part

### SUMMARY OF THE INVENTION

Various aspects of the present invention are defined in the independent claims. Some preferred features are defined in the dependent claims.

Described herein is a straddle type vehicle comprising:
a front wheel;
a pair of front forks rotatably supporting the front wheel; and
a front fender disposed between the pair of front forks and having a fork protecting part provided in front of the front forks, said fork protecting part swelling outward in the vehicle width direction and having a front wall positioned in a front part of the straddle type vehicle,
wherein an inclination of the front wall with respect to a road surface on which the straddle type vehicle is disposed is larger than an inclination of an outer peripheral surface of a central part of the front fender in the vehicle width direction in the front fender in which the front wall is provided.

Also described herein is a straddle type vehicle including: a front wheel; a pair of front forks rotatably supporting an axle of the front wheel; and a front fender disposed radially outwardly of the front wheel and between the pair of front forks, in which the front fender has a fork protecting part provided in front of the front forks, the fork protecting part swells outward in the vehicle width direction, the fork protecting part has a front wall positioned in a front part of the straddle type vehicle, and an inclination of the front wall with respect to a road surface on which the straddle type vehicle is disposed is larger than an inclination of an outer peripheral surface of a central part of the front fender in the vehicle width direction in the front fender in which the front wall is provided.

According to such a straddle type vehicle, the front wall formed on the front fender in front of the front fork can protect the front fork from pebbles and the like flung up by the front wheel and more securely prevent damage to the front fork.

The fork protecting part may have a protrusion protruding above the outer peripheral surface of the front fender.

A line may perpendicularly intersect the front wall and extend obliquely forwardly of the straddle type vehicle in a plan view of the straddle type vehicle.

A protector outer end of the fork protecting part in the vehicle width direction may be positioned inwardly in the vehicle width direction of a fork outer end of the front fork in the vehicle width direction.

The protector outer end may be positioned outwardly in the vehicle width direction of a center of the front fork in the vehicle width direction.

The front fork may be cylindrically shaped. The fork protecting part may have a rear wall facing the front fork. The rear wall may be formed in the rear of the front wall and may be curved along an outer periphery of the front fork.

An inclined wall may be formed in an inner part of the protrusion in the vehicle width direction. The inclined wall may be inclined outwardly in the vehicle width direction. An upper part (of the inclined wall may be positioned outwardly of a lower part of the inclined wall in the vehicle width direction.

The upper part of the inclined wall may be inclined outwardly in the vehicle width direction to a greater degree than the lower part of the inclined wall.

The front fender may have a fender front section disposed in front of the front forks, and a fender rear section (extending continuously from the fender front section to the rear of the front forks. The fender front section and the fender rear section may be integrally formed. Alternatively, the sections may be separately formed.

The fender rear section may have an inner wall extending in the fore-and-aft direction of the straddle type vehicle. The inner wall may be disposed inwardly of the front fork in the vehicle width direction. The inner wall may overlap with the fork protecting part in a side view of the straddle type vehicle.

A mount part on which the inner wall of the front fender is mounted may be formed on an inner part of the front fork in the vehicle width direction.

The mount part may be formed on each of a left front fork and a right front fork (constructing the front forks. The inner wall may be formed to face each of the right and left front forks. The front fender may be mounted on the mount parts using a connecting member for connecting the pair of inner walls together.

The connecting member may be formed along a shape of an inner surface of the front fender.

The connecting member may be U-shaped in a cross section taken along the longitudinal direction of the front fork and the vehicle width direction.

The present invention may provide a straddle type vehicle that is provided with a front fender having a function for protecting front forks and that allows more secure prevention of damage to the front forks.

### BRIEF DESCRIPTION OF THE DRAWINGS

These and other aspects of the present invention will now be described, by way of example only, with reference to the accompanying drawings, in which:
FIG. 1 is a left side view of a motorcycle as a straddle type vehicle in accordance with an embodiment of the present invention;
FIG. 2 is a front view showing a front fender mounted on front forks of the motorcycle in accordance with the embodiment of the present invention;
FIG. 3 is a left side view showing the front fender mounted on the front forks of the motorcycle in accordance with the embodiment of the present invention;
FIG. 4 is a plan view showing the front fender mounted on the front forks of the motorcycle in accordance with the embodiment of the present invention;
FIG. 5 is a perspective view of the front fender of the motorcycle in accordance with the embodiment of the present invention;
FIG. 6 is a left side view of the front fender of the motorcycle in accordance with the embodiment of the present invention;
FIG. 7 is a front view of the front fender of the motorcycle in accordance with the embodiment of the present invention;
FIG. 8 is a plan view of the front fender of the motorcycle in accordance with the embodiment of the present invention;
FIG. 9 is a plan view showing the inside of the front fender of the motorcycle in accordance with the embodiment of the present invention;
FIG. 10 is a cross-sectional view taken along line A-A of FIG. 3; and
FIG. 11 is a cross-sectional view showing the vicinity of parts on which a front fender 100 is mounted taken along line B-B of FIG. 3.

### DETAILED DESCRIPTION OF THE DRAWINGS

An embodiment of a straddle type vehicle in accordance with the present invention will be described hereinafter with reference to drawings. The same or similar reference numerals and symbols are given to the same or similar parts in the descriptions of drawings. It should be noted, however, that the drawings are schematic illustrations and dimensional ratios in each drawing may be different from the reality.

Accordingly, the following descriptions should be referred to in determining specific dimensions and so forth. In addition, dimensional relationships and ratios may be different between the drawings.

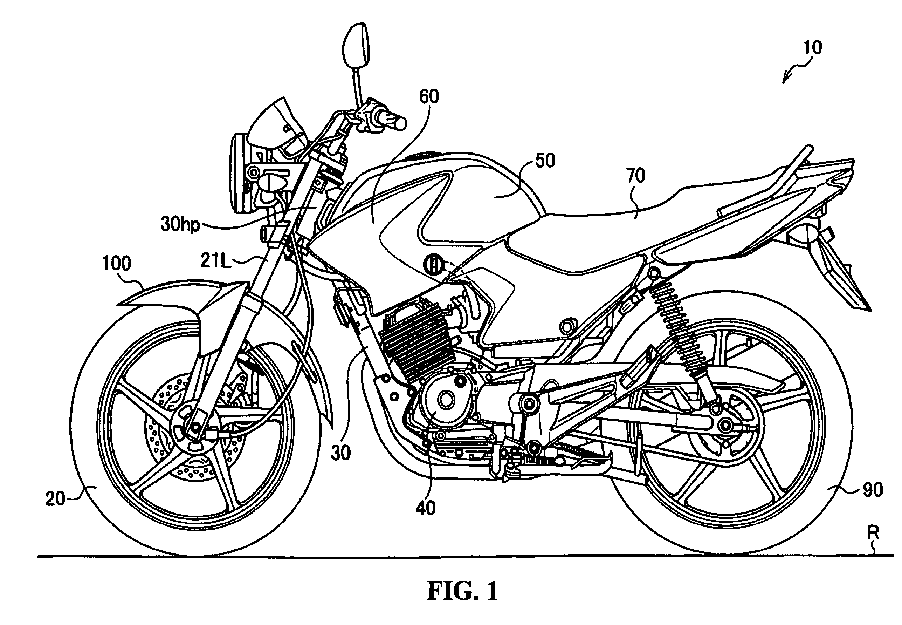

A general construction of a motorcycle 10 as a straddle type vehicle in accordance with this embodiment will be described. FIG. 1 is a left side view of the motorcycle 10 disposed on a road surface R.

As shown in FIG. 1, the motorcycle 10 has a vehicle body frame 30 forming a framework of the motorcycle 10. The motorcycle 10 has a front wheel 20, a fuel tank 50, an engine 40, a seat 70, a rear wheel 90, and a front fender 100. The fuel tank 50, the engine 40, and the seat 70 are mounted on the vehicle body frame 30.

The front wheel 20 is rotatably supported by a pair of front forks 21L and 21R connected to the vehicle body frame 30. FIG. 1 shows the left front fork 21L.

The pair of front forks 21L and 21R are connected to a steering shaft (not shown) via a bridge (not shown). The steering shaft (not shown) is supported by a steering head pipe 30hp of the vehicle body frame 30 so as to be rotatable to left and right with respect to the traveling direction of the motorcycle 10.

The front fender 100 is mounted on the pair of front forks 21L and 21R. The front fender 100 is disposed radially outwardly of the front wheel 20 and between the pair of front forks 21L and 21R.

The engine 40 is a power unit for generating driving force of the motorcycle 10. The engine 40 is mounted on the vehicle body frame 30 in the general center of the motorcycle 10 in the fore-and-aft direction. The engine 40 generates driving force to be transmitted to the rear wheel 90. Driving force generated in the engine 40 is transmitted to the rear wheel 90 through a chain.

The seat 70 is disposed in the rear of the fuel tank 50. A rider is to be seated on the seat 70.

The fuel tank 50 stores fuel to be supplied to the engine 40. The fuel tank 50 is disposed above the engine 40. The fuel tank 50 is disposed in front of the seat 70.

Vehicle body covers (hereinafter referred to as "shrouds" ) 60 are disposed on both sides of the fuel tank 50. The shroud 60 extends downwardly of the fuel tank 50.

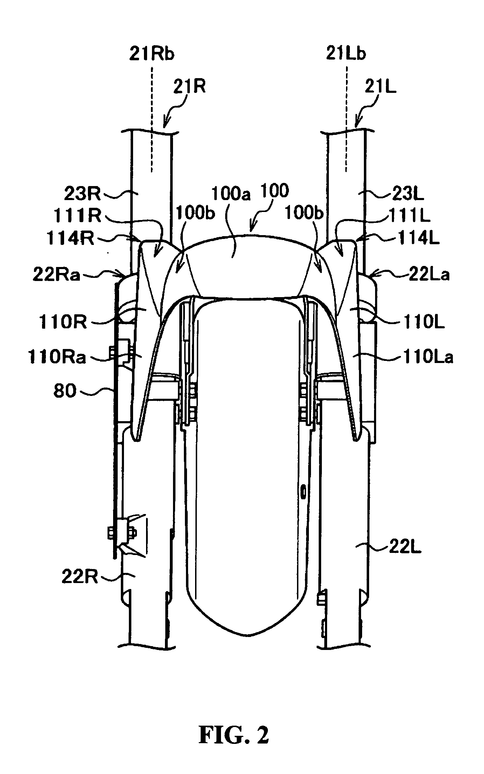

A construction of the front forks 21L and 21R will now be described with reference to FIGs. 2 through 4.

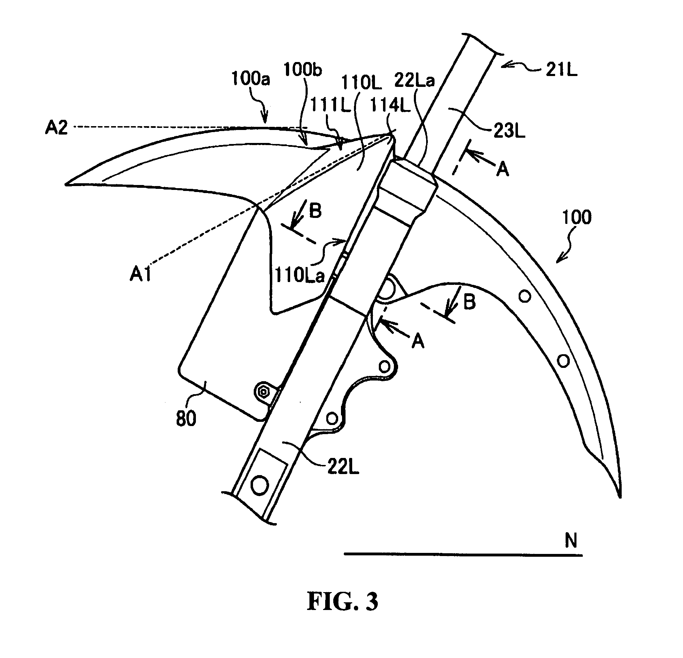

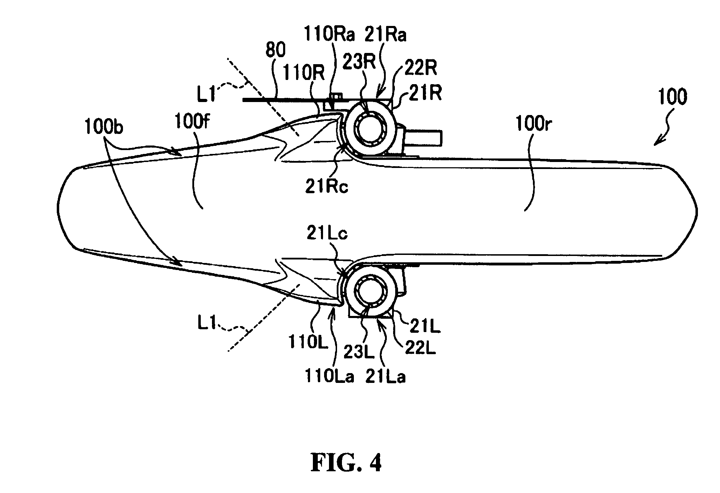

FIG. 2 is a front view showing the front fender 100 mounted on the front forks 21L and 21R. FIG. 3 is a left side view showing the front fender 100 mounted on the front forks 21L and 21R. FIG. 4 is a plan view showing the front fender 100 mounted on the front forks 21L and 21R.

As shown in FIG. 2, the front fork 21L positioned on the left side has a cylindrical outer tube 22L and a cylindrical inner tube 23L. The front fork 21R positioned on the right side similarly has an outer tube 22R and an inner tube 23R.

In other words, the front forks 21L and 21R are upright forks that the outer tubes 22L and 22R are disposed below the inner tubes 23L and 23R.

The outer tube 22L has an upper end 22La in which the inner tube 23L is inserted. The outer tube 22R has an upper end 22Ra in which the inner tube 23R is inserted. A license plate 80 may be disposed on the outer tube 23R.

A construction of the front fender 100 will now be described with reference to FIGs. 2 through 4.

The front fender 100 has fork protectors 110L and 110R. In this embodiment, the fork protectors 110L and 110R construct fork protecting parts.

The fork protectors 110L and 110R swell or bulge outwardly of the front fender 100 in the vehicle width direction. The fork protector 110L has an outer end 110La protruding the most outwardly in the vehicle width direction. The fork protector 110R has an outer end 110Ra protruding the most outwardly in the vehicle width direction.

The outer ends 110La and 110Ra protrude outwardly of shoulder surfaces 100b of the front fender 100 in the vehicle width direction. The outer ends 110La and 110Ra are positioned inwardly in the vehicle width direction of outer ends 21La and 21Ra of the front forks 21L and 21R in the vehicle width direction (see FIG. 4).

The outer ends 110La and 110Ra are positioned outwardly in the vehicle width direction of center lines 21Lb and 21Rb of the front forks 21L and 21R in the vehicle width direction.

In this embodiment, the outer ends 110La and 110Ra construct protector outer ends, and the outer ends 21La and 21Ra construct fork outer ends.

The fork protectors 110L and 110R are formed in front of the front forks 21L and 21R with the front fender 100 mounted on the front forks 21L and 21R (see FIGs. 3 and 4).

The fork protector 110L has a front wall 111L positioned in a front part of the motorcycle 10 to face generally forward. The fork protector 110R has a front wall 111R positioned in a front part of the motorcycle 10 to face generally forward.

As shown in FIG. 3, an inclination A1 of the front walls 111L and 111R with respect to the road surface R on which the motorcycle 10 is disposed is larger than an inclination A2 of an outer peripheral surface of a central part of the front fender 100 in the vehicle width direction in positions in which the front walls 111L and 111R are disposed. The road surface R may be assumed to be generally planar between the points at which the front and rear wheels 20, 90 contact said road surface R.

As shown in FIG. 4, the front fender 100 has a fender front section 100f and a fender rear section 100r. The fender front section 100f is disposed in front of the front forks 21L and 21R. The fender rear section 100r extends continuously from the fender front section 100f to the rear of the front forks 21L and 21R. The fender front section 100f and the fender rear section 100r are integrally formed.

As shown in FIG. 4, a line L1 perpendicularly intersecting the front walls 111L and 111R extends obliquely forwardly of the motorcycle 10 in a plan view of the motorcycle 10.

The fork protectors 110L and 110R have protrusions 114L and 114R. The protrusion 114L protrudes above the upper end 22La of the outer tube 22L in the vertical direction of the motorcycle 10. The protrusion 114R protrudes above the upper end 22Ra of the outer tube 22R in the vertical direction of the motorcycle 10.

The protrusions 114L and 114R protrude above an outer peripheral surface 100a of the central part of the front fender 100 in the vehicle width direction.

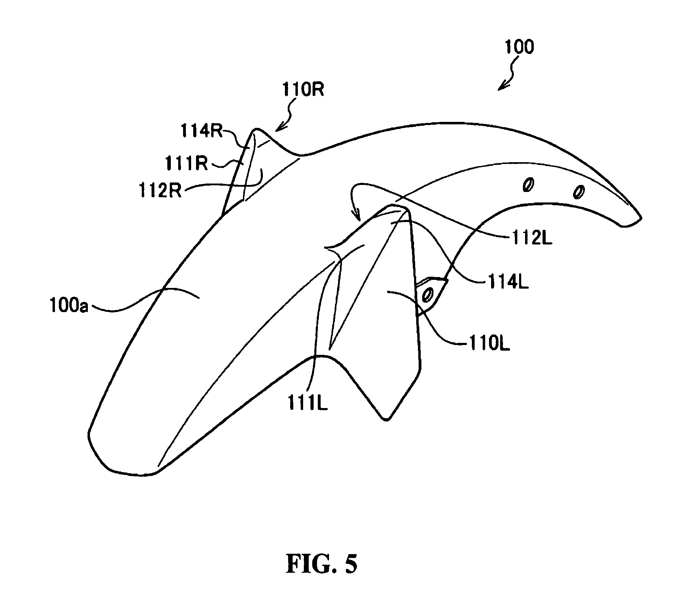

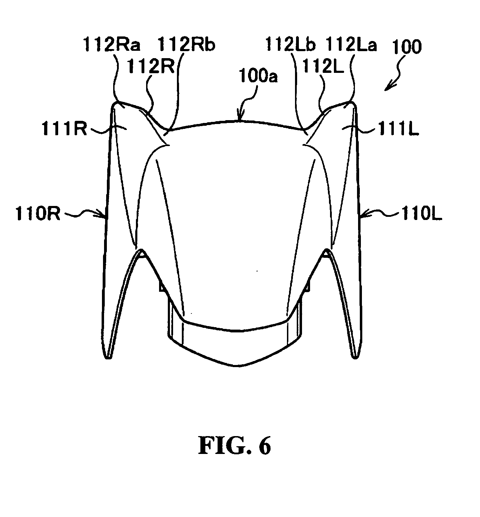

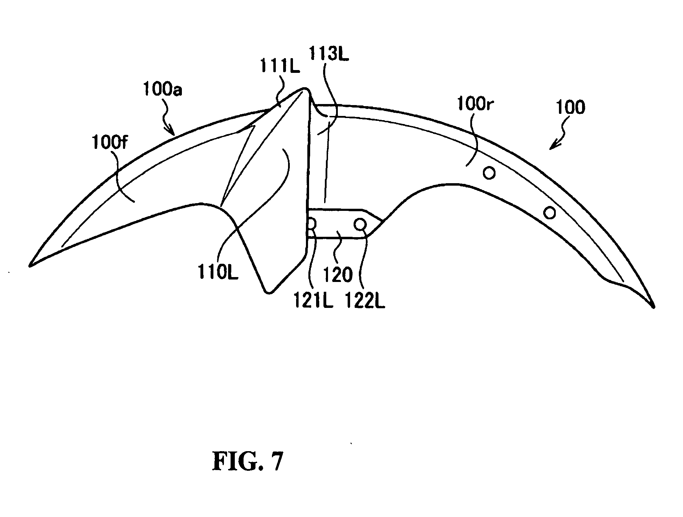

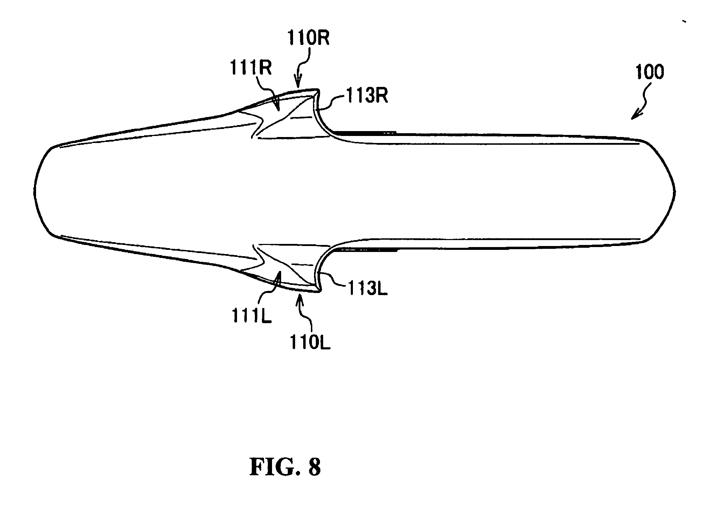

FIG. 5 is a perspective view of the front fender 100. FIG. 6 is a front view of the front fender 100. FIG. 7 is a left side view of the front fender 100. FIG. 8 is a plan view of the front fender 100.

Inclined walls 112L and 112R inclined outwardly in the vehicle width direction are formed in inner parts of the protrusions 114L and 114R in the vehicle width direction.

The inclined wall 112L has an upper part 112La and a lower part 112Lb. The upper part 112La is positioned outwardly of the lower part 112Lb in the vehicle width direction. The upper part 112La is inclined outwardly in the vehicle width direction to a greater degree than the lower part 112Lb.

The inclined wall 112R has an upper part 112Ra and a lower part 112Rb. The upper part 112Ra is positioned outwardly of the lower part 112Rb in the vehicle width direction. The upper part 112Ra is inclined outwardly in the vehicle width direction to a greater degree than the lower part 112Rb.

As shown in FIGs. 7 and 8, the fork protector 110L has a rear wall 113L facing the front wall 111L. The rear wall 113L is formed in the rear of the front wall 111L and curves along an outer periphery 21Lc (not shown in FIG. 7, see FIG. 4) of the front fork 21L.

The fork protector 110R has a rear wall 113R facing the front wall 111R. The rear wall 113R is formed in the rear of the front wall 111R and curves along an outer periphery 21Rc (not shown in FIG. 7, see FIG. 4) of the front fork 21R.

As shown in FIG. 7, the fender rear section 100r has an inner wall 120L extending in the fore-and-aft direction of the motorcycle 10. The inner wall 120L is formed to face the front fork 21L. Holes 121L and 122L used for mounting on the front fork 21L are provided in the inner wall 120L.

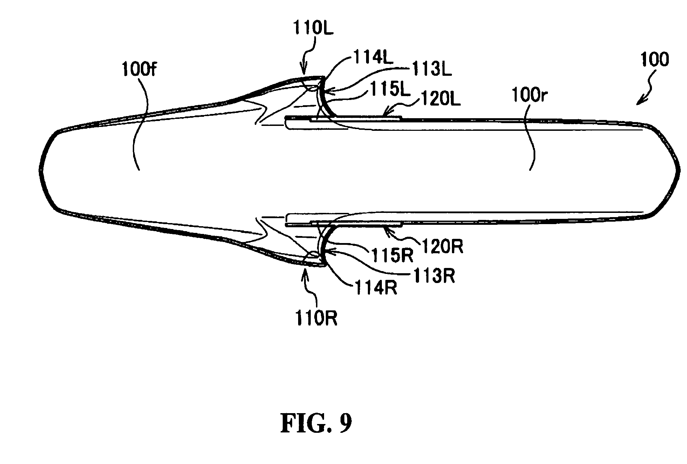

As shown in FIG. 9, the fender rear section 100r has an inner wall 120R extending in the fore-and-aft direction of the motorcycle 10. The inner wall 120R is formed to face the front fork 21R.

FIG. 9 is a plan view showing the inside of the front fender 100. The front fender 100 has support walls 115L and 115R inside.

The inner wall 120L extends continuously from the rear wall 113L, forwardly of the motorcycle 10, and continuously to the support wall 115L inside the front fender 100.

The inner wall 120R extends continuously from the rear wall 113R, forwardly of the motorcycle 10, and continuously to the support wall 115R inside the front fender 100.

The support walls 115L and 115R extend in directions that the protrusions 114L and 114R protrude above the outer peripheral surface 100a of the front fender 100.

The front fender 100 is formed by injection molding that a resin material is injected into a metal mold by pressure when it is produced. The metal mold is separated in the vertical direction of the front fender 100. The support walls 115L and 115R are formed along the separating direction of the mold.

In other words, the support walls 115L and 115R have a function for supporting the protrusions 114L and 114R during separation from the mold.

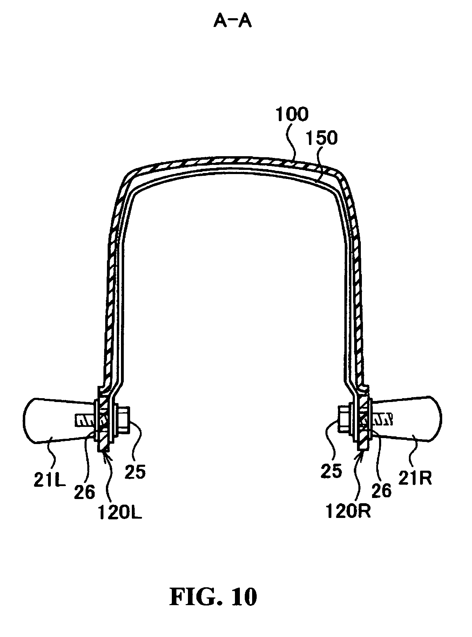

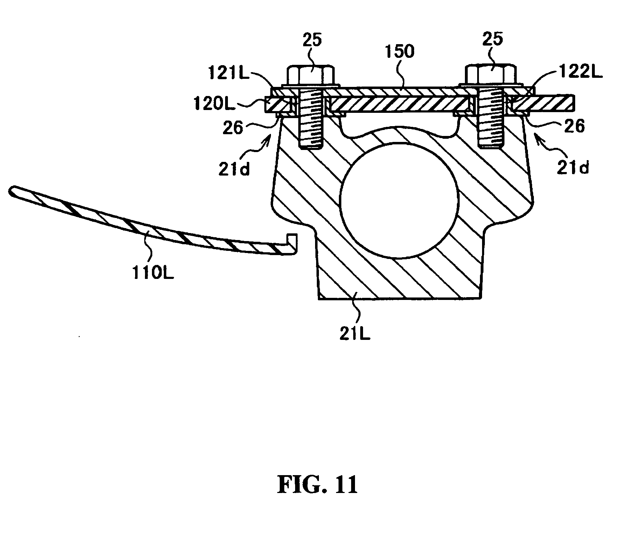

A construction for mounting the front fender 100 on the front forks 21L and 21R will now be described with reference to FIGs. 10 and 11.

FIG. 10 is a cross-sectional view taken along line A-A of FIG. 3. FIG. 11 is a cross-sectional view showing the vicinity of parts on which the front fender 100 is mounted taken along line B-B of FIG. 3.

A mount 21d on which an inner wall 120L of the front fender 100 is mounted is formed on an inner part of the front fork 21L in the vehicle width direction. Specifically, the mount 21d is formed on an inner part of the outer tube 23L in the vehicle width direction. The mount 21d is disposed to face the inner wall 120L.

The mount 21d is similarly formed on an inner part of the front fork 21R (specifically the outer tube 23R) in the vehicle width direction (the mount of the outer tube 23R is not shown in FIG. 11). In this embodiment, the mount 21d constructs a mount part.

As shown in FIG. 10, the front fender 100 is mounted on the mounts 21d using a fender stay 150 connecting the pair of inner walls 120 together. The fender stay 150 is formed along a shape of an inner surface of the front fender 100. The fender stay 150 is U-shaped in a cross section taken along the longitudinal direction of the front forks 21L and 21R and the vehicle width direction. In this embodiment, the fender stay 150 constructs a connecting member.

As shown in FIG. 11, the front fender 100 is mounted by bolts 25, which are inserted from an inner side to an outer side in the vehicle width direction of the motorcycle 10. Collars 26 for absorbing a size difference between an outer diameter of the bolt 25 and a hole diameter of the holes 121L and 122L are disposed in the holes 121L and 122L. The bolts 25 are inserted in the holes 121L and 122L in which the collars 26 are disposed and screwed into female threads provided in the mount 21d of the front fork 21.

In the motorcycle 10, the inclination A1 of the front walls 111L and 111R of the fork protectors 110L and 110R with respect to the road surface R is larger than the inclination A2 of the outer peripheral surface of the central part of the front fender 100 in the vehicle width direction in the positions in which the front walls 111L and 111R of the front fender 100 are provided.

According to the thus configured motorcycle 10, the front walls 111L and 111R formed in front of the front forks 21L and 21R in the front fender 100 can protect the front forks 21L and 21R from pebbles and the like flung up by the front wheel. Further, it is possible to more securely prevent damage to the front forks 21L and 21R, in particular the inner tubes 22L and 22R.

In the motorcycle 10, the front forks 21 are so-called upright forks. The protrusions 114L and 114R are positioned higher than the upper ends 22La and 22Ra in the vertical direction of the motorcycle 10.

The inner tubes 22L and 22R on the sides of the outer tubes 23L and 23R frequently go into and out of the outer tubes 23L and 23R due to stroke movements of the front forks 21L and 21R. Therefore, oil seals on the sides of the outer tubes 23L and 23R are apt to be damaged when the inner tubes 22L and 22R on the side of the outer tubes 23L and 23R are damaged.

On the other hand, the inner tubes 22L and 22R on the sides of the outer tubes 23L and 23R are protected from pebbles and the like in the motorcycle 10. Therefore, the front forks 21L and 21R can be securely prevented from damage. Accordingly, it is possible to prevent oil leakage due to damage to the inner tubes 22L and 22R on the sides of the outer tubes 23L and 23R.

In the motorcycle 10, the line L1 perpendicularly intersecting the front walls 111L and 111R extends obliquely forwardly of the motorcycle 10 in a plan view of the motorcycle 10.

According to the thus configured motorcycle 10, when a pebble flying from the front of the motorcycle 10 hits the front wall 111L or 111R, for example, it rebounds in the direction of an angle of symmetry with respect to the line L1, that is, outwardly in the vehicle width direction of the motorcycle 10.

Accordingly, the motorcycle 10 can protect the front forks 21L and 21R and more securely prevent damage to the front forks 21L and 21R.

In the motorcycle 10, the outer ends 110La and 110Ra are positioned inwardly in the vehicle width direction of the outer ends 21La and 21Ra of the front forks 21L and 21R in the vehicle width direction. In the motorcycle 10, the outer ends 110La and 110Ra are positioned inwardly in the vehicle width direction of the center lines 21b of the front forks 21L and 21R in the vehicle width direction.

Accordingly, the motorcycle 10 can securely protect the front forks 21L and 21R with a narrower vehicle width.

In the motorcycle 10, the front forks 21L and 21R are cylindrically shaped. The rear walls 113L and 113R in the fork protectors 110L and 110R facing the front forks 21L and 21R curve along the outer peripheries 21Lc and 21Rc of the front forks 21L and 21R.

Accordingly, the front fender 100 can securely protect the front forks 21L and 21R, in particular the inner tubes 22L and 22R on the sides of the outer tubes 23L and 23R.

In the motorcycle 10, the inclined walls 112L and 112R inclined outwardly in the vehicle width direction are formed in the inner parts of the protrusions 114L and 114R in the vehicle width direction. The upper parts 112La and 112Ra are positioned outwardly of the lower parts 112Lb and 112Rb in the vehicle width direction. The upper parts 112La and 112Ra are inclined outwardly in the vehicle width direction to a greater degree than the lower parts 112Lb and 112Rb.

The thus configured motorcycle 10 can repel pebbles and the like flying to the motorcycle 10 outwardly.

Accordingly, the motorcycle 10 can protect the front forks 21L and 21R and more securely prevent damage to the front forks 21L and 21R.

In the motorcycle 10, the front fender 100 has the fender front section 100f and the fender rear section 100r. The fender front section 100f and the fender rear section 100r are integrally formed. The support walls 115L and 115R are formed on the inner surface of the front fender 100. The support walls 115L and 115R extend in the directions that the protrusions 114L and 114R protrude.

The support walls 115L and 115R can support the protrusions 114L and 114R during separation from the mold. In other words, the support walls 115L and 115R can retain the shapes of the protrusions 114L and 114R during separation from the mold.

Accordingly, the protrusions protruding upwardly of the outer peripheral surface 100a of the front fender 100 can be formed in a production method using a metal mold. Thereby, production efficiency of the front fender 100 can be improved.

In the motorcycle 10, the inner walls 120 are disposed to face the inner parts of the front forks 21L and 21R in the vehicle width direction. The mounts 21d on which the inner walls 120 are mounted are formed on the inner parts of the front forks 21L and 21R in the vehicle width direction.

Thereby, it is difficult to visually recognize the area where the front fender 100 is mounted on the front forks 21L and 21R in the motorcycle 10. This allows improvement in the external appearance of the motorcycle 10.

In the motorcycle 10, the front fender 100 is mounted on the mounts 21d using the fender stay 150 connecting the inner walls 120 together.

Accordingly, the front fender 100 can be firmly mounted on the front forks 21L and 21R.

The fender stay 150 is formed along the shape of the inner surface of the front fender 100. The fender stay 150 is U-shaped in a cross section taken along the longitudinal direction of the front forks 21L and 21R and the vehicle width direction.

Accordingly, the fender stay 150 can be prevented from interfering with the front wheel 20.

This allows reduction of a gap between the front wheel 20 and the front fender 100. Accordingly, the front fender 100 can be firmly mounted on the front forks 21L and 21R, and the external appearance of the motorcycle 10 can be improved.

The present invention has been disclosed above by way of an embodiment thereof. However, it should not be understood that the descriptions and drawings constituting a part of this disclosure limit the present invention. The skilled artisans will appreciate that various alternative embodiments may be made from this disclosure.

In the embodiment described above, the fork protectors 110L and 110R have the protrusions 114L and 114R protruding above the outer peripheral surface 100a of the front fender 100. However, the outer peripheral surface 100a positioned between the protrusions 114L and 114R may protrude to a level generally equivalent to the protrusions 114L and 114R.

It is only required that the line perpendicularly intersecting the front walls 111L and 111R in a plan view of the motorcycle 10 extend obliquely forwardly of the motorcycle 10. The line is not limited to the angle of the line L1 shown in FIG. 4. For example, the line may extend obliquely forwardly and inwardly in the vehicle width direction of the motorcycle 10.

In the embodiment described above, the outer ends 110La and 110Ra protrude outwardly of the shoulder surfaces 100b of the front fender 100 in the vehicle width direction and are positioned outwardly in the vehicle width direction of the center lines 21Lb and 21Rb of the front forks 21L and 21R in the vehicle width direction.

However, it is only required that the outer ends 110La and 110Ra be positioned inwardly in the vehicle width direction of the outer ends 21La and 21Ra of the front forks 21L and 21R in the vehicle width direction. In other words, it is not necessarily required that the outer ends 110La and 110Ra be positioned outwardly in the vehicle width direction of the center lines 21Lb and 21Rb of the front forks 21L and 21R in the vehicle width direction. The outer ends 110La and 110Ra may be positioned inwardly in the vehicle width direction of the center lines 21Lb and 21Rb of the front forks 21L and 21R.

In the embodiment described above, descriptions are made with reference to FIG. 6 that the upper part 112La of the inclined wall 112L is positioned outwardly of the lower part 112Lb in the vehicle width direction and that the upper part 112Ra of the inclined wall 112R is positioned outwardly of the lower part 112Rb in the vehicle width direction. It is also described that the upper part 112La is inclined outwardly in the vehicle width direction to a greater degree than the lower part 112Lb and that the upper part 112Ra is inclined outwardly in the vehicle width direction to a greater degree than the lower part 112Rb.

However, the shapes of the inclined walls 112L and 112R are not limited to the shapes in FIG. 6. For example, the upper part 112La of the inclined wall 112L may be in a sectorial shape extending outwardly and inwardly in the vehicle width direction to a greater degree than the lower part 112Lb.

In the embodiment described above, descriptions are made with reference to FIGs. 7 and 8 that the rear walls 113L and 113R are formed in the rear of the front walls 111L and 111R and curve along the outer peripheries 21Lc and 21Rc of the front forks 21L and 21R. However, it is only required that they have shapes protecting the outer peripheries 21Lc and 21Rc of the front forks 21L and 21R, and they may not be curved. For example, the rear walls 113L and 113R may cover the outer peripheries 21Lc and 21Rc of the front forks 21L and 21R in rectangular shapes.

The front fender 100 has the fender front section 100f and the fender rear section 100r. The fender front section 100f is disposed in front of the front forks 21L and 21R. The fender rear section 100r extends continuously from the fender front section 100f to the rear of the front forks 21L and 21R. However, the front fender 100 may not be split into the fender front section 100f and the fender rear section 100r. The front fender 100 may be produced from other split parts.

The fender front section 100f and the fender rear section 100r are integrally formed. However, they may not be integrally formed.

The inner walls 120 are disposed inwardly of the front forks 21L and 21R in the vehicle width direction. The inner walls 120 overlap with the fork protectors 110L and 110R in a side view of the motorcycle 10. However, they may not overlap.

The fender stay 150 is used to mount the front fender 100 on the mounts 21d. However, it is not necessarily required that the fender stay 150 be used.

The fender stay 150 is formed along the shape of the inner surface of the front fender 100. However, the fender stay 150 may be formed into any shape that does not interfere with rotation of the front wheel 20, and may not be formed along the shape of the inner surface of the front fender 100. In other words, it may not be U-shaped.

As described above, it is a matter of course that the present invention includes various embodiments that are not disclosed herein. Therefore, it is intended that the technical scope of the present invention be defined solely by the particular matters of the invention according to appropriate claims based on the above descriptions.

Description of Reference Numerals and Symbols
10: motorcycle
20: front wheel
21L,21R: front fork
21La,21Ra: outer end
21Rc: outer periphery
22L,22R: outer tube
22La,22Ra: upper end
23L,23R: inner tube
30: vehicle body frame
40: engine
50: fuel tank
70: seat
90: rear wheel
80: license plate
100: front fender
100f: fender front section
100r: fender rear section
100a: outer peripheral surface
100b: shoulder surface
110L,110R: fork protector
110La,110Ra: outer end
111L,111R: front wall
112L,112R: inclined wall
112La,112Ra: upper part
112Lb,112Rb: lower part
113L,113R: rear wall
114L,114R: protrusion
115L,115R: support wall
120L,120R: inner wall
A1,A2: inclination
L1: line

## Claims

1. A straddle type vehicle (10) comprising:
a front wheel (20);
a pair of front forks (21L, 21R) rotatably supporting the front wheel (20); and
a front fender (100) disposed between the pair of front forks (21L, 21R) and having a fork protecting part (110L, 110R) provided in front of the front forks (21L, 21R), said fork protecting part (110L, 110R) swelling outward in the vehicle width direction and having a front wall (111L, 111R) positioned in a front part of the straddle type vehicle (10),
wherein an inclination (A1) of the front wall (111L, 111R) with respect to a road surface (R) on which the straddle type vehicle (10) is disposed is larger than an inclination (A2) of an outer peripheral surface of a central part of the front fender (100) in the vehicle width direction in the front fender in which the front wall (111L, 111R) is provided; and wherein
the fork protecting part (110L, 110R) has a protrusion (114L, 114R) protruding above the outer peripheral surface of the front fender (100);
an inclined wall (112L, 112R) inclined outwardly in the vehicle width direction is formed in an inner part of the protrusion (114L, 114R) in the vehicle width direction,
an upper part (112La, 112Ra) of the inclined wall (112L, 112R) is positioned outwardly of a lower part (112Lb, 112Rb) of the inclined wall (112L, 112R) in the vehicle width direction; **characterized in that**
the upper part (112La, 112Ra) of the inclined wall (112L, 112R) is inclined outwardly in the vehicle width direction to a greater degree than the lower part (112Lb, 112Rb) of the inclined wall (112L, 112R).

2. The straddle type vehicle (10) according to claim 1, wherein a line (L1) perpendicularly intersecting the front wall (111L, 111R) extends obliquely forwardly of the straddle type vehicle (10) in a plan view of the straddle type vehicle.

3. The straddle type vehicle (10) according to claim 1 or claim 2, wherein a protector outer end (110La, 110Ra) of the fork protecting part (110L, 110R) in the vehicle width direction is positioned inwardly in the vehicle width direction of a fork outer end (21La, 21Ra) of the front fork (21L, 21R)) in the vehicle width direction.

4. The straddle type vehicle (10) according to claim 3, wherein the protector outer end (110La, 110Ra) is positioned outwardly in the vehicle width direction of a center (21Lb, 21Rb) of the front fork (21L, 21R) in the vehicle width direction.

5. The straddle type vehicle (10) according to any preceding claim, wherein the fork protecting part (110L, 110R) has a rear wall (113L, 113R) facing the front fork (21L, 21R), said rear wall (113L, 113R) corresponding to the shape of an outer periphery of the front fork (21L, 21R).

6. The straddle type vehicle (10) according to claim 5, wherein the front fork (21L, 21R) is cylindrically shaped and the rear wall (113L, 113R) of the fork protecting part (110L, 110R) is formed in the rear of the front wall (111L, 111R) and is curved along the outer periphery of the front fork (21L, 21R).

7. The straddle type vehicle (10) according to any preceding claim, wherein the front fender (100) comprises:
a fender front section (100f) disposed in front of the front forks (21L, 21R); and
a fender rear section (100r)extending continuously from the fender front section (100f) to the rear of the front forks (21L, 21R),
wherein the fender front section (100f) and the fender rear section (100r) are integrally formed.

8. The straddle type vehicle (10) according to any preceding claim, wherein the fender rear section (100r) has an inner wall (120L, 120R) extending in the fore-and-aft direction of the straddle type vehicle (10), said inner wall (120L, 120R) being disposed inwardly of the front fork (21L, 21R) in the vehicle width direction and overlapping with the fork protecting part (110L, 110R) in a side view of the straddle type vehicle (10).

9. The straddle type vehicle (10) according to claim 8, wherein a mount part (21d) on which the inner wall (120L, 120R) of the front fender (100) is mounted is formed on an inner part of the front fork (21L, 21R) in the vehicle width direction.

10. The straddle type vehicle (10) according to claim 9,
wherein the mount part (21d) is formed on each of a left front fork (21L) and a right front fork (21R) constructing the front forks,
the inner wall (120L, 120R) is formed to face each of the right and left front forks (21L, 21R), and
the front fender (100) is mounted on the mount parts (21d) using a connecting member (150) for connecting the pair of inner walls (120L, 120R) together.

11. The straddle type vehicle (10) according to claim 10, wherein the connecting member (150) is formed along a shape of an inner surface of the front fender (100).

12. The straddle type vehicle (10) according to claim 10 or 11, wherein the connecting member (150) is U-shaped in a cross section taken along the longitudinal direction of the front fork (21L, 21R) and the vehicle width direction.

## Patentansprüche

1. Grätschsitz-Fahrzeug (10), das aufweist:
ein Vorderrad (20);
ein Paar Vorderradgabeln (21L, 21R), die drehbar das Vorderrad (20) tragen; und
einen Vorderkotflügel (100), der zwischen dem Paar der Vorderradgabeln (21L, 21R) angeordnet ist, und ein Gabelschutzteil (110L, 110R) aufweist, das vor den Vorderradgabeln (21L, 21R) vorhanden ist, wobei sich das Gabelschutzteil (110L, 110R) nach außen in der Breitenrichtung des Fahrzeuges aufwölbt und eine Vorderwand (111L, 111R) aufweist, die in einem Vorderteil des Grätschsitz-Fahrzeuges (10) positioniert ist,
wobei eine Neigung (A1) der Vorderwand (111L, 111R) mit Bezugnahme auf eine Fahrbahn (R), auf der sich das Grätschsitz-Fahrzeug (10) bewegt, größer ist als eine Neigung (A2) einer äußeren Umfangsfläche eines Mittelteils des Vorderkotflügels (100) in der Breitenrichtung des Fahrzeuges im Vorderkotflügel, in dem die Vorderwand (111L, 111R) vorhanden ist; und wobei
das Gabelschutzteil (110L, 110R) einen Vorsprung (114L, 114R) aufweist, der über die äußere Umfangsfläche des Vorderkotflügels (100) vorsteht;
eine geneigte Wand (112L, 112R), die in der Breitenrichtung des Fahrzeuges nach außen geneigt ist, in einem inneren Teil des Vorsprunges (114L, 114R) in der Breitenrichtung des Fahrzeuges ausgebildet ist,
ein oberer Teil (112La, 112Ra) der geneigten Wand (112L, 112R) nach außen von einem unteren Teil (112Lb, 112Rb) der geneigten Wand (112L, 112R) in der Breitenrichtung des Fahrzeuges positioniert ist; **dadurch gekennzeichnet, dass**
das obere Teil (112La, 112Ra) der geneigten Wand (112L, 112R) nach außen in der Breitenrichtung des Fahrzeuges in einem stärkeren Maß geneigt ist als der untere Teil (112Lb, 112Rb) der geneigten Wand (112L, 112R).

2. Grätschsitz-Fahrzeug (10) nach Anspruch 1, bei dem sich eine Linie (L1), die senkrecht die Vorderwand (111L, 111R) schneidet, schräg nach vom vom Grätschsitz-Fahrzeug (10) in einer Draufsicht des Grätschsitz-Fahrzeuges erstreckt.

3. Grätschsitz-Fahrzeug (10) nach Anspruch 1 oder Anspruch 2, bei dem ein äußeres Ende einer Schutzeinrichtung (110La, 110Ra) des Gabelschutzteils (110L, 110R) in der Breitenrichtung des Fahrzeuges nach innen in der Breitenrichtung des Fahrzeuges von einem äußeren Gabelende (21 La, 21Ra) der Vorderradgabel (21L, 21R) in der Breitenrichtung des Fahrzeuges positioniert ist.

4. Grätschsitz-Fahrzeug (10) nach Anspruch 3, bei dem das äußere Ende einer Schutzeinrichtung (110La, 110Ra) nach außen in der Breitenrichtung des Fahrzeuges von einer Mitte (21Lb, 21Rb) der Vorderradgabel (21L, 21R) in der Breitenrichtung des Fahrzeuges positioniert ist.

5. Grätschsitz-Fahrzeug (10) nach einem der vorhergehenden Ansprüche, bei dem das Gabelschutzteil (110L, 110R) eine hintere Wand (113L, 113R) aufweist, die zur Vorderradgabel (21L, 21R) hin liegt, wobei die hintere Wand (113L, 113R) der Form eines äußeren Umfanges der Vorderradgabel (21 L, 2 1 R) entspricht.

6. Grätschsitz-Fahrzeug (10) nach Anspruch 5, bei dem die Vorderradgabel (21L, 21R) zylindrisch ausgebildet ist und die hintere Wand (113L, 113R) des Gabelschutzteils (110L, 110R) in der Rückseite der Vorderwand (111L, 111R) ausgebildet und längs des äußeren Umfanges der Vorderradgabel (21L, 21R) gebogen ist.

7. Grätschsitz-Fahrzeug (10) nach einem der vorhergehenden Ansprüche, bei dem der Vorderkotflügel (100) aufweist:
einen Kotflügelvorderabschnitt (100f), der vor den Vorderradgabeln (21L, 21R) angeordnet ist; und
einen Kotflügelhinterabschnitt (100r), der sich kontinuierlich vom Kotflügelvorderabschnitt (100f) zur Rückseite der Vorderradgabeln (21L, 21R) erstreckt,
wobei der Kotflügelvorderabschnitt (100f) und der Kotflügelhinterabschnitt (100r) zusammenhängend ausgebildet sind.

8. Grätschsitz-Fahrzeug (10) nach einem der vorhergehenden Ansprüche, bei dem der Kotflügelhinterabschnitt (100r) eine Innenwand (120L, 120R) aufweist, die sich in der Längsrichtung des Grätschsitz-Fahrzeuges (10) erstreckt, wobei die Innenwand (120L, 120R) nach innen von der Vorderradgabel (21L, 21R) in der Breitenrichtung des Fahrzeuges angeordnet ist und sich mit dem Gabelschutzteil (110L, 110R) in einer Seitenansicht des Grätschsitz-Fahrzeuges (10) überlappt.

9. Grätschsitz-Fahrzeug (10) nach Anspruch 8, bei dem ein Befestigungsteil (21d), an dem die Innenwand (120L, 120R) des Vorderkotflügels (100) angebracht ist, auf einem inneren Teil der Vorradgabel (21L, 21R) in der Breitenrichtung des Fahrzeuges ausgebildet ist.

10. Grätschsitz-Fahrzeug (10) nach Anspruch 9,
bei dem das Befestigungsteil (21d) an jedem von einer linken Vorderradgabel (21L) und einer rechten Vorderradgabel (21R), die die Vorderradgabeln aufbauen, ausgebildet ist,
wobei die Innenwand (120L, 120R) so ausgebildet ist, dass sie zu einer jeden der rechten und linken Vorderradgabel (21L, 21R) hin liegt, und
der Vorderkotflügel (100) an den Befestigungsteilen (21d) bei Benutzung eines Verbindungselementes (150) für das Miteinanderverbinden des Paares der Innenwände (120L, 120R) angebracht ist.

11. Grätschsitz-Fahrzeug (10) nach Anspruch 10, bei dem das Verbindungselement (150) längs einer Form einer Innenfläche des Vorderkotflügels (100) ausgebildet ist.

12. Grätschsitz-Fahrzeug (10) nach Anspruch 10 oder 11, bei dem das Verbindungselement (150) im Querschnitt entlang der Längsrichtung der Vorderradgabel (21 L, 21R) und der Breitenrichtung des Fahrzeuges U-förmig ist.

## Revendications

1. Véhicule du type à enfourcher (10), comprenant :
une roue avant (20) ;
une paire de fourches avant (21L, 21R) supportant de manière rotative la roue avant (20) ; et
un garde-boue avant (100) agencé entre la paire de fourches avant (21R, 21L) et comportant une partie de protection des fourches (110L, 110R) agencée en face des fourches avant (21L, 21R), ladite partie de protection des fourches (110L, 110R) débordant vers l'extérieur dans la direction de la largeur du véhicule, et comportant une paroi avant (111L, 111R) positionnée dans une partie avant du véhicule du type à enfourcher (10),
une inclinaison (A1) de la paroi avant (111L, 111R) par rapport à une surface de la route (R) sur laquelle est agencé le véhicule du type à enfourcher (10) est disposé étant supérieure à une inclinaison (A2) d'une surface périphérique externe d'une partie centrale du garde-boue avant (100) dans la direction de la largeur du véhicule dans le garde-boue avant, dans lequel est agencée la paroi avant (111L, 111R), et dans lequel
la partie de protection des fourches (110L, 110R) comporte une protubérance (114L, 114R) débordant au-dessus de la surface périphérique externe du garde-boue avant (100) ;
une paroi inclinée (112L, 112R), inclinée vers l'extérieur dans la direction de la largeur du véhicule est formée dans une partie interne de la protubérance (114L, 114R), dans la direction de la largeur du véhicule,
une partie supérieure (112La, 112Ra) de la paroi inclinée (112L, 112R) est positionnée vers l'extérieur d'une partie inférieure (112Lb, 112Rb) de la paroi inclinée (112L, 112R), dans la direction de la largeur du véhicule, **caractérisé en ce que**
la partie supérieure (112La, 112Ra) de la paroi inclinée (112L, 112R) est inclinée vers l'extérieur dans la direction de la largeur du véhicule à un degré supérieur à celle de la partie inférieure (112Lb, 112Rb) de la paroi inclinée (112L, 112R).

2. Véhicule du type à enfourcher (10) selon la revendication 1, dans lequel une ligne (L1) coupant perpendiculairement la paroi avant (111L, 111R) s'étend de manière oblique vers l'avant du véhicule du type à enfourcher (10) dans une vue en plan du véhicule du type à enfourcher.

3. Véhicule du type à enfourcher (10) selon les revendications 1 ou 2, dans lequel une extrémité externe de protection (110La, 110Ra) de la partie de protection des fourches (110L, 110R) dans la direction de la largeur du véhicule est positionnée vers l'intérieur, dans la direction de la largeur du véhicule, d'une extrémité externe de fourche (21 La, 2 1 Ra) de la fourche avant (2 1 L, 2 1 R), dans la direction de la largeur du véhicule.

4. Véhicule du type à enfourcher (10) selon la revendication 3, dans lequel l'extrémité externe de protection (110La, 110Ra) est positionnée vers l'extérieur, dans la
direction de la largeur du véhicule, d'un centre (21Lb, 21Rb) de la fourche avant (21L, 21R), dans la direction de la largeur du véhicule.

5. Véhicule du type à enfourcher (10) selon l'une quelconque des revendications précédentes, dans lequel la partie de protection des fourches (110L, 110R) comporte une paroi arrière (113L, 113R) faisant face à la fourche avant (21L, 21R), ladite paroi arrière (113L, 113R) ayant une forme correspondant à la forme d'une périphérie externe de la fourche avant (21L, 21R).

6. Véhicule du type à enfourcher (10) selon la revendication 5, dans lequel la fourche avant (21L, 21R) a une forme cylindrique, la paroi arrière (113L, 113R) de la partie de protection des fourches (110L, 110R) étant formée sur l'arrière de la paroi avant (111L, 111R) et étant courbée le long de la périphérie externe de la fourche avant (21L, 21R).

7. Véhicule du type à enfourcher (10) selon l'une quelconque des revendications précédentes, dans lequel le garde-boue avant (100) comprend :
une section avant de garde-boue (100f) agencée devant les fourches avant (21L, 21R) ; et
une section arrière de garde-boue (100r) s'étendant de manière continue de la section avant du garde-boue (100f) vers l'arrière des fourches avant (21L, 21R) ;
dans lequel la section avant du garde-boue (100f) et la section arrière du garde-boue (100r) sont formées d'une seule pièce.

8. Véhicule du type à enfourcher (10) selon l'une quelconque des revendications précédentes, dans lequel la section arrière du garde-boue (100r) comporte une paroi interne (120L, 120R) s'étendant dans la direction allant vers l'avant et vers l'arrière du véhicule du type à enfourcher (10), ladite paroi interne (120L, 120R) étant agencée vers l'intérieur de la fourche avant (21L, 21R), dans la direction de la largeur du véhicule, et chevauchant la partie de protection des fourches (110L, 110R) dans une vue latérale du véhicule du type à enfourcher (10).

9. Véhicule du type à enfourcher (10) selon la revendication 8, dans lequel une partie de montage (21d) sur laquelle est montée la paroi interne (120L, 120R) du garde-boue avant (100) est formée sur une partie interne de la fourche avant (21L, 21R), dans la direction de la largeur du véhicule.

10. Véhicule du type à enfourcher selon la revendication 9,
dans lequel la partie de montage (21d) est formée sur chacune d'une fourche avant de gauche (2 1 L) et d'une fourche avant de droite (2 1 R), formant les fourches avant,
la paroi interne (120L, 120R) étant formée de sorte à faire face à chacune des fourches avant de droite et de gauche (21L, 21R) ; et
le garde-boue avant (100) étant monté sur les parties de montage (21d) par l'intermédiaire d'un élément de connexion (150) pour connecter la paire de parois internes (120L, 120R).

11. Véhicule du type à enfourcher (10) selon la revendication 10, dans lequel l'élément de connexion (150) est formé le long d'une forme d'une surface interne du garde-boue avant (100).

12. Véhicule du type à enfourcher (10) selon les revendications 10 ou 11, dans lequel l'élément de connexion (150) a une forme en U dans une section transversale prise le long de la direction longitudinale de la fourche avant (21L, 21R) et de la direction de la largeur du véhicule.
